# EUROPEAN PATENT APPLICATION

(11) **EP 1 577 760 A2**
(43) Date of publication of application: **21.09.2005**
(21) Application number: 05005657.1
(22) Date of filing: 15.03.2005
(51) Int. Cl.: G06F 9/44

(54) **Method and system for testing software development activity**

(30) Priority: 15.03.2004 US 553249 P; 15.03.2004 US 553252 P; 15.03.2004 US 553253 P; 15.03.2004 US 553197 P; 04.03.2005 US 72040
(71) Applicant: Ramco Systems Limited, Chennai, Tamilnadu 600 113 (IN)
(72) Inventor: Meenakshisundaram, Krishnamoorthy, Abhiramapuram, Chennai 600 018 (IN); Jayaraman, Shyamala, c/o Rajeswari, Chennai 600 014 (IN); Sundararajan, Parthasarathy, Chennai 600 083 (IN); Devalla, Raghuram, Adambakkam, Chennai 600 088 (IN); Ramaswamy, Srinivasan, Ganga Nagar Nanganallur Chennai 600 061 (IN)
(74) Representative: Clarke, Alison Clare

(57) **Abstract**

A system (100) and method to perform planning and performing testing for software modules within an automated development system are described. The system includes a testing module (112) containing an automated test case generation module (211), a test case execution and analysis module (212), a regression test planning module (213), a test plan generation module (214) and an automated test plan management module (215). These modules work together to provide an integrated test platform for creating and managing the test environment, creating test plans and test cases, performing unit level testing, module integration testing and system testing within a single development environment.

## Description

### FIELD OF THE INVENTION

Embodiments of the present invention relate generally to the technical field of software development and, in one exemplary embodiment, to methods and systems to perform planning and performing testing for software modules within an automated development system.

### BACKGROUND

Software testing and automating software testing is one of the key topics in software engineering. Typical sets of activities performed in software testing arc test plan creation related to the objective, identifying test cases, executing test cases against the software, and verification and certifying the software based on execution results.

Types or classes of testing may be listed as business level system/acceptance testing, integration level testing for checking co-existence with other parts, unit testing for certifying basic units of development, and technical or performance testing to verify the stability and the loading characteristics. Many tools are available today to perform these activities in specific domains.

Issues faced by the software testing groups are ensuring that the set of specifications available to testers are reliable with respect to implementation, identification of all the paths through the software flow to create test cases, identification of support drivers to aid in testing the units independently, and identification of data requirements and creating an execution plan. These issues are created primarily due to the lack of specifications that are structured and reliable to enable test planners to come up with a comprehensive plan.

Moreover, when changes are made to the software, the relation to the cases that need to be tested is created manually and is prone to oversights or increase in the testing load when over cautious. Another key problem is, since the testing group may be part of the development, the issue of knowledge creation needed to write valid test plans is a major issue. In most of the projects, a lot of resources are consumed in communicating expected behavior to the testing group.

Software developed for many applications are tested with provision for manual entry and logging of these test cases in documents. These documents need to have naming convention in the test cases. There needs to be a sequence to execute them and any software issue arising out of this testing is also manually communicated. Files that have this data are retained as soft copies and updated in a secure storage system; otherwise they are printed as hard copies and retained for reference. An ability to streamline this testing process and collect the both sequence and results automatically enabling a robust software release with proper testing completion is not accomplished without manual support.

A test plan generated for a conventional development process is different from the test plan that used for a maintenance or enhancement release. This test plan for enhancement release needs analysis of the existing test case and execution dependencies that will provide a sufficient and complete list of test cases in the test plan for execution.

Testing of any developed software can be done in a number of ways. Streamlining the testing process having a well documented schedule for the test, prior to its initiation is a major overhead for most organizations. The awareness that generally testing takes more time than development justifies the complexity behind the process. To ensure an integrated environment is provided for users to record their testing sequences, automating the process of testing and also provide estimate for the testing to be done is a major hurdle.

It is very hard to formally identify all the paths that need to be tested. The paths also need to be classified as business system level cases, integration cases and Unit cases based on the staged testing approach. For technical testing there is a need to create volume testing plans to validate all the hot spots in the implementation.

List of issues that need to be addressed are representation of software specifications in a structured format that is understood by the testing group, creating an ability to view and pick the various paths through the software structure, creating an ability to classify and record cases as part of a plan, and support for creating execution of test cases and the results.

### SUMMARY

The below described embodiments of the present invention are directed to methods and systems to perform planning and testing for software modules within an automated development system. According to one embodiment, there is provided a system for supporting enterprise software testing. The system includes a testing module containing an automated test case generation module, a test case execution and analysis module, a regression test planning module, a test plan generation module, and an automated test plan management module. These modules work together to provide an integrated test platform for creating and managing the test environment, creating test plans and test cases, performing unit level testing, module integration testing and system testing within a single development environment.

In another embodiment, software development activity is tested within a software application. A testing environment within the development environment is created, and resources are identified for use within the testing process. Test plans are created from software module development specifications. Additional test cases various paths within the software development process are derived, test cases executed and test results recorded. Regression test cases are defining and executing if modifications have been made to software module specification subsequent to completion of testing.

In yet another embodiment, there is provided a machine-readable medium storing a set on instructions that, when executed by a machine, cause of the machine to perform a method for analyzing interactions among software artifacts. The method creates a testing environment within the development environment and identifying of resources to be utilized within the testing process, creates test plans from software module development specifications, derives additional test cases from various paths within the software development process, executing test cases and recording test results, and defining and executing regression test cases if modifications have been made to software module specification subsequent to completion of testing.

The details of one or more embodiments of the invention are set forth in the accompanying drawings and the description below. Other features, objects, and advantages of the invention will be apparent from the description and drawings, and from the claims.

### BRIEF DESCRIPTON OF THE DRAWINGS

FIG 1 is a block diagram depicting a system having a software development system in accordance with one exemplary embodiment of the present invention.

FIG. 2 is a block diagram illustrating a general programmable processing system for use in programmable processing system in accordance with various embodiments of the present invention.

FIG. 3 is a block diagram depicting an automated test case generation module and a test case execution and analysis module within a software development system in accordance with one exemplary embodiment of the present invention.

FIG. 4 is a block diagram depicting a regression test planning module within a software development system in accordance with one exemplary embodiment of the present invention.

FIG 5 is a block diagram depicting a test plan generation module within a software development system in accordance with one exemplary embodiment of the present invention.

FIG 6 is a block diagram depicting an automated test plan management module within a software development system in accordance with one exemplary embodiment of the present invention.

FIG 7 is a flowchart for an automated test plan management according to an exemplary embodiment of the present invention.

### DETAILED DESCRIPTION

A method and system to perform planning and performing testing for software modules within an automated development system are described. In the following description, for purposes of explanation, numerous specific details are set forth in order to provide a thorough understanding of the present invention. It will be evident, however, to one skilled in the art that the present invention may be practiced without these specific details.

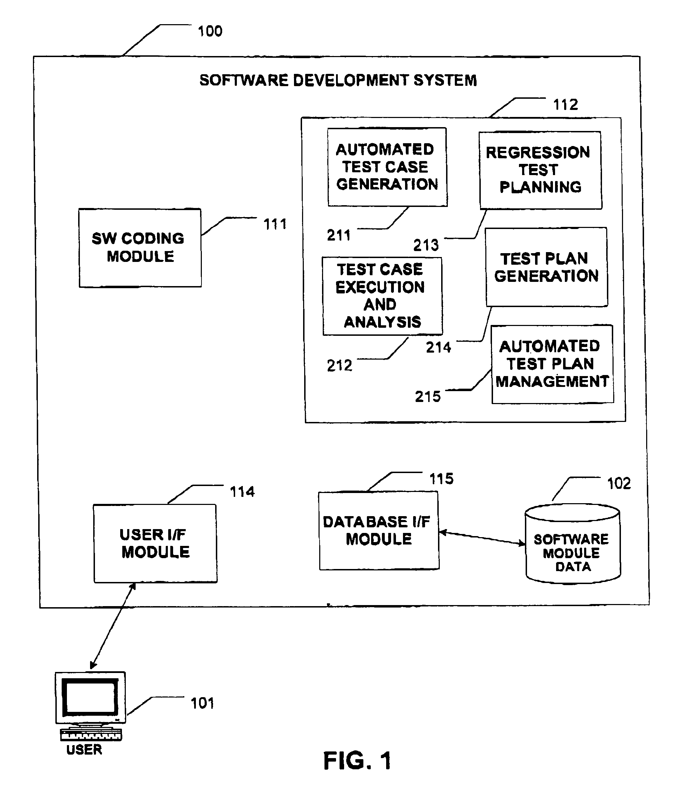

FIG. 1 is a block diagram depicting a system having a software development system in accordance with one exemplary embodiment of the present invention. A software development system 100 is constructed using a set of processing modules to perform the development, maintenance and testing of applications and related processing modules. The set of processing modules may include in part a software coding module 111, software testing module 112, a user interface module 113, and a database interface module 114. Users 101 of system 100 communicate with the system through the user interface module 113 while performing all of the development and testing activities. Users 101 typically interact with the system 100 using a terminal or client computing system 101 that communicates with the system using a data transfer protocol. This communications may be a serial connection, a modem connection, a hard-wired connection and a network connection that permits user 101 to interact with system 100. User interface module 113 performs the processing functions necessary to permit the communications to occur over the connection between user 101 and system 100. While the exemplary embodiment disclosed herein uses a client-server architecture, one skilled in the art will recognize that other architectures including a single processing system containing all of the processing modules as well as a distributed processing system having a collection of different processing systems for each of the processing functions may be utilized without departing from the present invention as recited within the attached claims.

Software coding module 111 generates the applications and related software modules that are part of the software development activities. These applications and software modules may include executable modules, source code, object code libraries and any other form of software modules used within the software development process. These modules may be stored within a software module database 102 that system 100 accesses using database interface module 114.

Software testing module 112 performs testing operations of the applications and related software modules during the software development process. This testing process may utilize a set of test related modules that include an automated test case generation module 211, a test case execution and analysis module 212, a regression test planning module 213, a test plan generation module 214, and an automated test plan management module 215. These modules operate together as part of the testing process.

The automated test case generation module 211 generates test case data for use in testing applications and software modules as part of the testing process. The test case execution and analysis module 212 performs testing operations using test case data generated within the automated test case generation module 211 as part of testing of software modules. This module 212 also assists users in analysis of test result data that may be generated when test cases are executed. The regression test planning module 213 performs test plan analysis as software modules are modified following earlier testing operations to allow new testing to incorporate and benefit from information relating to the modifications being made. The test plan generation module 214 generates test plan data for use by automated test case generation module 211 in generating test case data based upon other information from the software development activities. The automated test plan management module 215 automates the management of all of the testing processes as part of an integrated approach to testing applications and software modules during the development process. These modules operate together as part of the testing process and are all described in additional detail below.

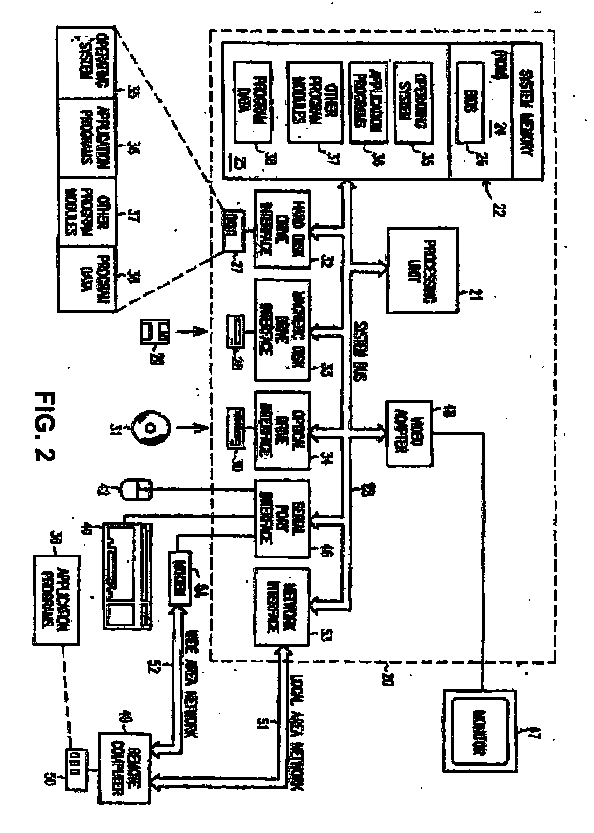

FIG. 2 is an overview diagram of an operating and hardware environment in conjunction with which embodiments of the invention may be practiced. The description of FIG. 2 is intended to provide a brief, general description of suitable computer hardware and a suitable computing environment in conjunction with which the invention may be implemented. In some embodiments, the invention is described in the general context of computer-executable instructions, such as program modules, being executed by a computer, such as a personal computer. Generally, program modules include routines, programs, objects, components, data structures, etc., that perform particular tasks or implement particular abstract data types.

In the embodiment shown in FIG. 2, a hardware and operating environment is provided that is applicable to any of the servers and/or remote clients shown in the other Figures.

As shown in FIG. 2, one embodiment of the hardware and operating environment includes a general purpose computing device in the form of a computer 20 (e.g., a personal computer, workstation, or server), including one or more processing units 21, a system memory 22, and a system bus 23 that operatively couples various system components including the system memory 22 to the processing unit 21. There may be only one or there may be more than one processing unit 21, such that the processor of computer 20 comprises a single central-processing unit (CPU), or a plurality of processing units, commonly referred to as a multiprocessor or parallel-processor environment. In various embodiments, computer 20 is a conventional computer, a distributed computer, or any other type of computer.

The system bus 23 can be any of several types of bus structures including a memory bus or memory controller, a peripheral bus, and a local bus using any of a variety of bus architectures. The system memory can also be referred to as simply the memory, and, in some embodiments, includes read-only memory (ROM) 24 and random-access memory (RAM) 25. A basic input/output system (BIOS) program 26, containing the basic routines that help to transfer information between elements within the computer 20, such as during start-up, may be stored in ROM 24. The computer 20 further includes a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media.

The hard disk drive 27, magnetic disk drive 28, and optical disk drive 30 couple with a hard disk drive interface 32, a magnetic disk drive interface 33, and an optical disk drive interface 34, respectively. The drives and their associated computer-readable media provide non volatile storage of computer-readable instructions, data structures, program modules and other data for the computer 20. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (RON[s), redundant arrays of independent disks (e.g., RAID storage devices) and the like, can be used in the exemplary operating environment.

A plurality of program modules can be stored on the hard disk, magnetic disk 29, optical disk 31, ROM 24, or RAM 25, including an operating system 35, one or more application programs 36, other program modules 37, and program data 38. A plug in containing a security transmission engine for the present invention can be resident on any one or number of these computer-readable media.

A user may enter commands and information into computer 20 through input devices such as a keyboard 40 and pointing device 42. Other input devices (not shown) can include a microphone, joystick, game pad, satellite dish, scanner, or the like. These other input devices are often connected to the processing unit 21 through a serial port interface 46 that is coupled to the system bus 23, but can be connected by other interfaces, such as a parallel port, game port, or a universal serial bus (USB). A monitor 47 or other type of display device can also be connected to the system bus 23 via an interface, such as a video adapter 48. The monitor 40 can display a graphical user interface for the user. In addition to the monitor 40, computers typically include other peripheral output devices (not shown), such as speakers and printers.

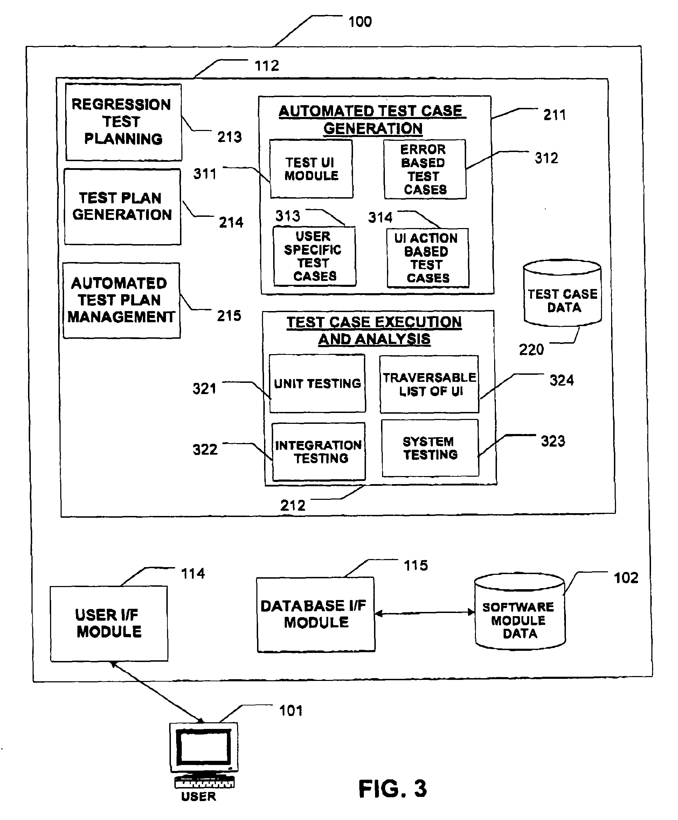

The computer 20 may operate in a networked environment using logical connections to one or more remote computers or servers, such as remote computer 49. These logical connections are achieved by a communication device coupled to or a part of the computer 20; the invention is not limited to a particular type of communications device. The remote computer 49 can be another computer, a server, a router, a network PC, a client, a peer device or other common network node, and typically includes many or all of the elements described above I/0 relative to the computer 20, although only a memory storage device 50 has been illustrated. The logical connections depicted in FIG. 3 include a local area network (LAN) 51 and/or a wide area network (WAN) 52. Such networking environments are commonplace in office networks, enterprise-wide computer networks, intranets and the internet, which are all types of networks.

When used in a LAN-networking environment, the computer 20 is connected to the LAN 51 through a network interface or adapter 53, which is one type of communications device. In some embodiments, when used in a WAN-networking environment, the computer 20 typically includes a modem 54 (another type of communications device) or any other type of communications device, e.g., a wireless transceiver, for establishing communications over the wide-area network 52, such as the internet. The modem 54, which may be internal or external, is connected to the system bus 23 via the serial port interface 46. In a networked environment, program modules depicted relative to the computer 20 can be stored in the remote memory storage device 50 of remote computer, or server 49. It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

In the foregoing detailed description of embodiments of the invention, various features are grouped together in a single embodiment for the purpose of streamlining the disclosure. This method of disclosure is not to be interpreted as reflecting an intention that the claimed embodiments of the invention require more features than are expressly recited in each claim. Rather, as the following claims reflect, inventive subject matter lies in less than all features of a single disclosed embodiment. Thus the following claims are hereby incorporated into the detailed description of embodiments of the invention, with each claim standing on its own as a separate embodiment. It is understood that the above description is intended to be illustrative, and not restrictive. It is intended to cover all alteraatives, modifications and equivalents as may be included within the spirit and scope of the invention as defined in the appended claims. Many other embodiments will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein," respectively. Moreover, the terms "first," "second," and "third," etc., are used merely as labels, and are not intended to impose numerical requirements on their objects.

FIG 3 is a block diagram depicting an automated test case generation module and a test case execution and analysis module within a software development system in accordance with one exemplary embodiment of the present invention. The automated test case generation module 211 includes a user interface and rule based test module 311, an error based test case module 312, a user specific test case module 313 and a user interface action based test case module 314. The test case execution and analysis module 212 includes a unit testing module 321, a traversable list of user interfaces module 322, an integration testing module 323, and a system testing module 324. All of these modules operate together as part of the software testing module 112.

These modules provide test management function(s) that covers the list of test cases and test execution cycles that cover the list of test cases associated with each of the test execution sequence provided and / or collected as information. There are two typically ways by which the support to recording this information can be done. The first and conventional way is provided through clear user interfaces that contain columns that support for provision of data related to different classification of test cases. The different classifications identified are error / information messages based test cases 312, user interface action based test cases 314, user specific test cases 313 enterable using a clearly provided user interface and rule based test cases 311. In all of these the user gets the benefit of defining his input data, pre-requisites and final outcome as result using the provided user interfaces. These are generated in an excel sheet in a format identified as explained below that will enable testing and logging of defects for follow up very easy.

One additional facility that has been built is the classification of the different kinds of test cases in broad levels as unit testing 321, integration testing 323 and system testing 324. For integration and system testing, the case of failure of the functionality is logged again in the list of test cases for testing. This is done as the cases require validation in further test cycles. The user also gets to log his feedback as an addendum to the provided list of logged details for each test case executed and tested.

The users can also avail the facility of testing sequence through traversable prototype of the list of user interfaces 322. Data may be provided either initially or at a later point in time. These sequences in traversals are considered the different test Execution sequences and automated for testing at a later date. Scenario's based testing provides two interfaces. The first interface supports the recording of information for testing in the form of sequences in traversable user interfaces and actions on user interfaces with provisional data while the second interface supports playing this recorded information automatically and storing the results in the log file as well as in the test management system for further proceeds.

In the above stated approach of providing data and also in the scenarios based execution sequences, the data modifications for testing is possible as both of them generate a spreadsheet. This spreadsheet contains the input and output data possible as columns where in data can be provided or changed. This data will be used for execution of the test sequence to record the results in the log file as well as in the system for further usage.

Any testing on completion is supported by a test completion certificate, which is an acknowledgement by an appointed supervisor for a planned release. The supervisor is provided the facility to view all the results and inputs. In addition the tested sequences are recorded as one set and optional execution with out recording is displayed for a random verification.

Some additional testing at a business service level is provided as an application layer artifact to verify even intermediate values for a thorough testing. Incorporation of memory leakage testing of some of the commonly used infrastructure components identified using test planning is also done. The user is also provided facilities for saying whether he needs testing the memory load, atomicity, concurrency, independence, deletion (ACID) tests for resource management server data and storage size verification and additional attributes for actual data semantics.

An impact analysis sheet is automatically generated on released products. This sheet contains the list of impacted artifacts and cases logged out of the purview of the main list of test cases. There is also a calculation of the actual effort in the time of the provided function points. Facility for overriding some of the unwanted failure test cases has been provided to ensure that this system is flexible for release but with proper documentation of the override.

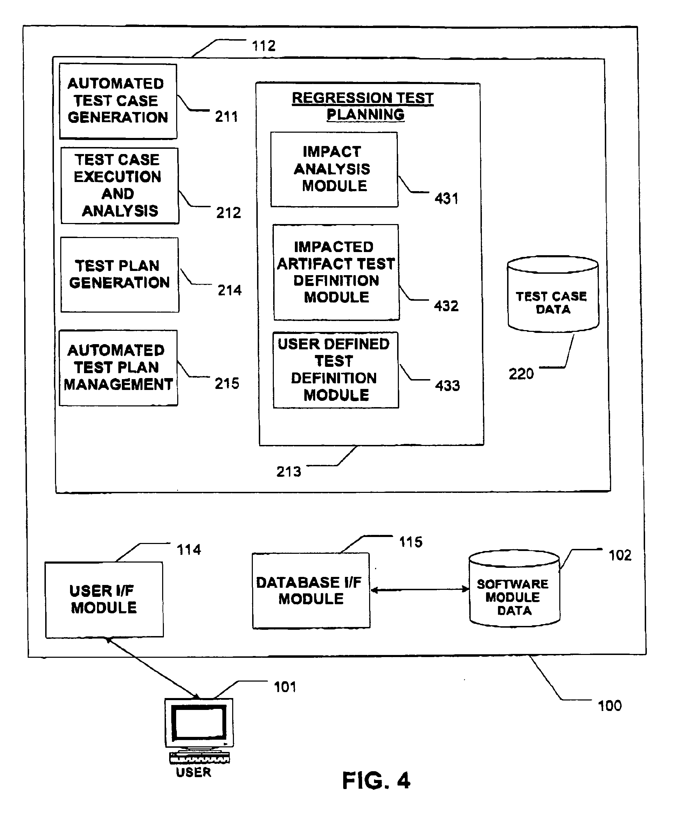

FIG 4 is a block diagram depicting a regression test planning module within a software development system in accordance with one exemplary embodiment of the present invention. The regression test planning module performs if function using an impact analysis module 431, an impacted artifact test definition module 432, and a user defined test definition module 433. These modules provide a model based infrastructure utilizing large amounts of information with test cases available over a variety of software delivery versions. These test cases also have relationships between them in that they cover almost all courses of test cases.

Whenever a released version of a product or a project is taken up for changes / enhancements, impact analysis based on work requests is the driving force. This analysis is performed using the impact analysis module 431. Impact analysis refers to analyzing the changes picking up the affected released set of software artifacts. Impact analysis is done with the released set of software artifacts that form the hierarchy of business operations.

Once impact analysis is over, test plan generation begins with development in parallel. A lead test engineer and a Project manager are allowed to look at setting up the system / unit test plan looking at the list of things that are being developed. One advantage with the system is that once impact analysis is over all the related test cases provided over a set of versions that cover the impacted artifact with respect to each event or the lower level artifact is picked up and made available for testing using the impacted artifact test definition module 432. This impacted artifact test case becomes a mandatory test case repository for setting up the test execution plan. The choice of finalizing the sufficient and complete list of test cases for the chosen release, based on impact analysis wrests with the lead test engineer and / or project manager who is aware of his list of test cases given to him as the base.

Additional test cases may also be provided in addition to this main list or repository of test cases. These additional test cases are defined using the user defined test definition module 433. The added list of case(s) henceforth forms the base list of cases automatically on re-work with the same component or it's down the line artifact for which this test case is associated.

The added advantage of impact analysis over testing is that statistics of how many times this component artifact was released and on all these cases how many of the test cases were used more number of times shall be provided for the benefit of the user to add/delete it to his test execution sequence for the current release suggested. All possible options of the basic course / alternate course mix is provided with the user getting as much support to decide and provide a robust test plan. The ultimate aim of providing the blended mix for satisfactory test creation and execution of the component to be released is achieved here. Whenever an integration issue is handled in this impact, the necessary integration test cases (mandatory) are tested without fail, with creation of integration information between components as interface between the components getting affected.

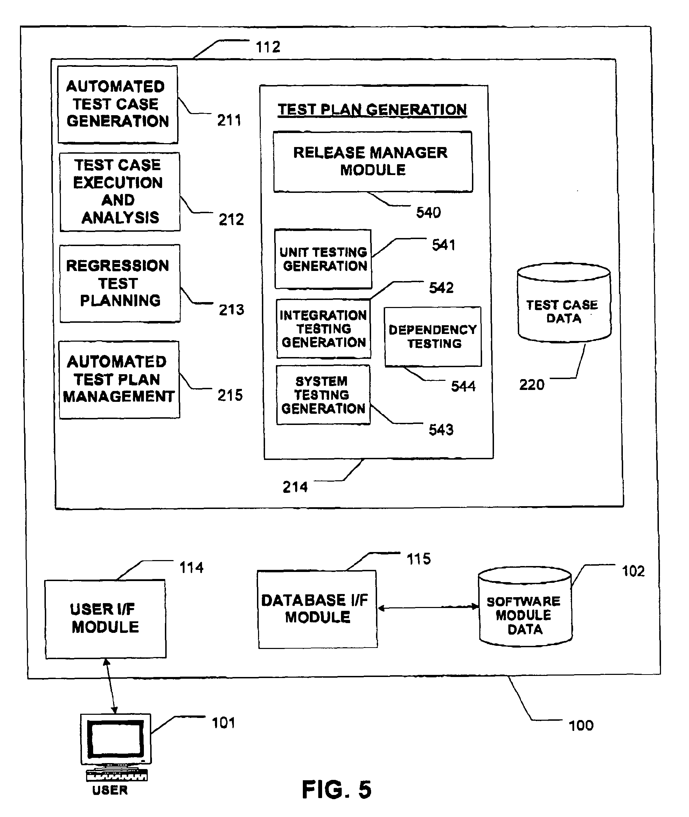

FIG 5 is a block diagram depicting a test plan generation module within a software development system in accordance with one exemplary embodiment of the present invention. Model based software eases testing process. Understanding the semantics of the data stored in the model in the form of errors, validations that have been raised using user interface behavior, interaction between user interfaces, data between the business objects and between processes, data masks, location specific validations, role specific validations, integration issues and environmental issues form the basis for a test plan.

Typically a release manager module 540 creates a version to be released in the context of a customer and project. These release versions are mapped to the respective "Requirement Change Notices (RCN)", "Engineering Change Requests (ECR)" and "Implementation Change Orders (ICO). Testing is done by a number of test engineers coordinated by a lead test engineer at a process level in case of unit testing.

For system testing, a process is carried out by a system testing generation module 543 for all the cases under the purview of the project. This holds true for a full version release as well as a hot fix release. A test plan collects initial information of the required hardware and software that needs to be provided to the test environment accounting for all in-depth details either as check lists if commonly used or specified as documentation. It also specifies the model from where the objects that needs to be code generated, compiled and deployed for testing. This testing is performed in a unit testing generation module 541 and an integration testing generation module 542. All related information for retrieval of data pertaining to objects / artifacts is also collected. From the existing information in the model, activities are available for providing information to the user classified as error based test cases 312, user interface test cases 311 and user specific test cases 313.

For all the test cases, the classification of what the test data will be collected. There will also be some additional pre-requisites that need to be carried out which will be collected. Events that are available in the solutioning model form the success test cases which will be pulled in this testing cycle, based on either, affected artifacts in development or from the considered work list and the associated solutioning events. Additional facility that has been provided is available from documentation provided by the user, in the form of basic and alternate course of events at different levels. Collection of whether this course is an exception is also available. Relationship between test cases and the sequencing of these test cases are possible to arrive at dependency test cases using a dependency testing module 544. Capture of special ways of handling some of the frequently used, memory intensive, data oriented, network intensive test cases which we will do more rounds of multiuser scenarios testing.

The test management picking this information from documentation collects the resultant value to be verified. A test execution plan is drawn by a Lead Test Engineer that comprises of the test cases derived out of the list given above for each version or sub-versions containing individual documents (requirement change notice, engineering change request and implementation change order). Information that test execution could happen for individual code sets like middle layer service execution alone, stored procedures, generation of XML from a web layer for transportation and verification with middle / application layer on integration is available. Typically function/component wise unit testing is seen in development, whereby integration related issues for an application are generated in the form of a table for interaction and, business objects for an application are associated with the process segment and data item information.

Once the test plan is generated, workflow ensures that the details for testing are sent as in the form of an email in addition to viewing as pending test jobs for a test engineer. The test engineer is provided with tools for automating the test process for the said test cases and records the results of the transaction set. Provision for different cycles of testing of the same test case(s) under different scenarios and consolidation of such information is also provided. Allocation of test engineers may also be changed during this course of different cycles of testing.

Test details and results and suggested attributes at different levels are stored in the model. This provides immense information for later stages of project life cycle when changes and integration issues have problems.

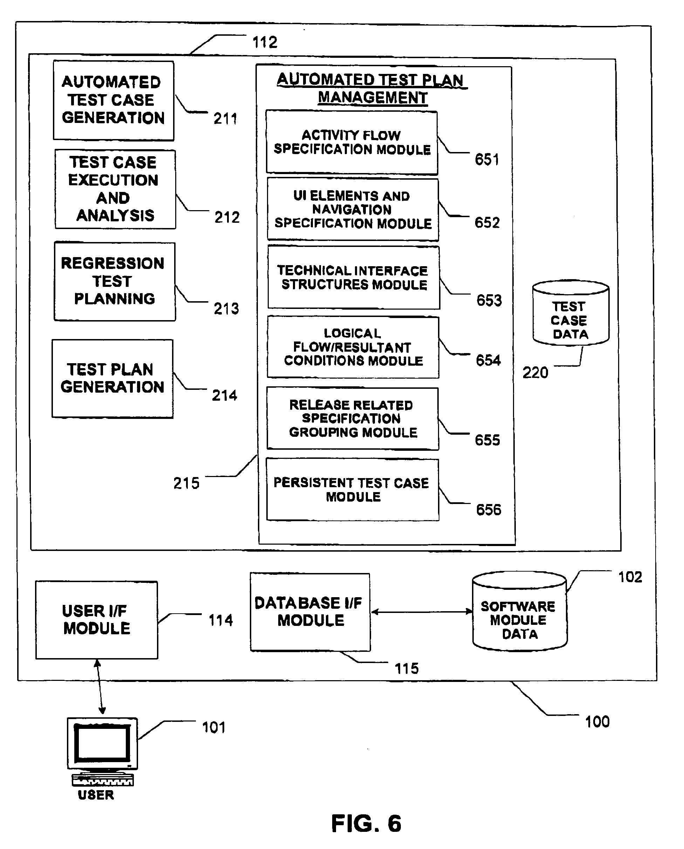

FIG. 6 is a block diagram depicting an automated test plan management module within a software development system in accordance with one exemplary embodiment of the present invention. A set of processing module coordinate their functions to permit the automated management of the test plans throughout the entire development and testing process.

In our approach, software structure specification drives testing efforts. The structure is created to support the testing requirements. The structure consists of an activity flow specification module 651 that provides the basis for the business level system testing. The structure also utilizes a user interface elements and navigation specifications module 652 to provide the basis for creating test execution instructions for the visual part of the system. A technical interface structures module 653 provides the basis for creating test execution instructions for the non-visual part of the system. A logical flow and resultant conditions module 654 provides the basis for creating the various level test cases associated with services. The structure also includes a release related specification grouping module 655 to aid in identifying grouping of release related specifications and related the test cases relevant to a release. Finally, the structure includes a persisted test case module 656 to provide persistent test case data for use against relevant nodes in the specification structure.

This structure serves as the backbone for creating test plans, deriving test cases for the various paths and storing the cases and recording the execution results. With the flow specification, all the business level test cases are derives by following the paths; with user interface elements test execution instructions are created. With the logical flow specifications, test cases may be created at various levels depending on interconnection with other parts of the system. By associating into the release groups, the specification node elements that participate, specific test plan will be derived with the list of necessary test cases and the test execution support artifacts (test data, stubs) will be stored at the relevant node level.

With this approach, test planning group can use the structured knowledge repository to create and manage testing of large software systems. Fundamental to this approach is creating the repository with the facility to adorn this with the needed structures to support test planning and management. This approach also caters to selecting the test cases specific to a release or maintenance work based on the nodes affected by that work and selecting the relevant test plan items.

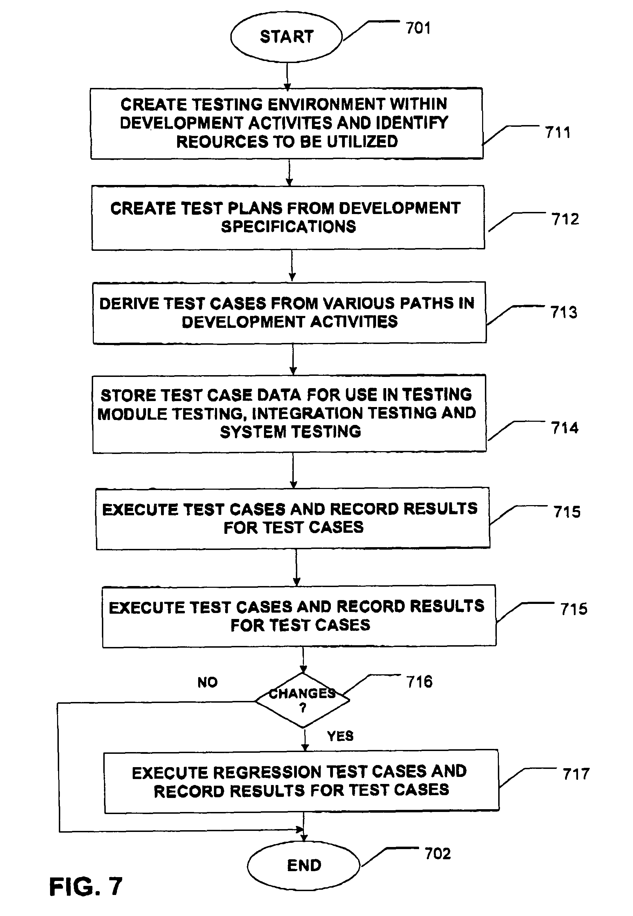

FIG 7 is a flowchart for an automated test plan management according to an exemplary embodiment of the present invention. The testing process begins 701 with the creation of a testing environment within the development environment and identification of resources to be utilized within the testing process within module 711. As part of this process, the module 711 lists people who do the testing (Version to be released, documents within a version to be tested, pick from artifact packaging structure the technology artifacts that stores model information and documents to model association, Testing engineers and association to versions etc.),

Once the environment is created, test plans are created from development specifications within module 712. This processing step includes creating a master list of test cases using the automation tool available and providing data changes for multiple scenarios to be tested and verified. Next, additional test cases are derived from various paths within the development process in module 713. This module 713 creates test cases with the flow specification all the business level test cases are derives by following the paths; with user interface elements test execution instructions are created; and by associating into the release groups, the specification node elements that participate, specific test plan will be derived with the list of necessary test cases.

All of the test case data is stored within a test data database 220 in module 714 for use in unit or module testing, integration testing of modules into the system and system level testing. Not that the test case data has been created and stored within database 220, test cases for unit testing, integration testing and system testing may be executed in module 715. This test execution may be repeated until all needed testing has been completed. Test results may also be recorded within database 220 for later use and comparison with results generated at other steps in the development process.

Because the development and testing process may occur over a time period in which requirements and specifications for modules and applications change, test module 716 determines if changes have occurred in the specifications for the software. If no changes have occurred, the processing may end 702. If changes have been identified, additional regression test cases may be executed within module 717 to complete a thorough testing of the software application and its related modules before the processing end 702.

Thus, a method and system to perform planning and performing testing for software modules within an automated development system have been described. Although the present invention has been described with reference to specific exemplary embodiments, it will be evident that various modifications and changes may be made to these embodiments without departing from the broader spirit and scope of the invention. Accordingly, the specification and drawings are to be regarded in an illustrative rather than a restrictive sense.

## Claims

1. A system (100) for testing software development activity, the system comprising:
a software coding module (111) ;
a user interface module (101); and
a testing module (112) for providing an integrated testing environment within a software development system, wherein the testing module (112) comprises:
an automated test case generation module (211);
a test case execution and analysis module (212) ;
a regression test planning module (213) ;
a test plan generation module (214); and
an automated test plan management module (215).

2. The system according to claim 1, wherein the automated test case generation module (211) comprises:
a user interface and rule based test module (311);
an error based test case module (312);
a user specific test case module (313); and
a user interface action based test case module (314), wherein said testing module (112) further comprises a test database, and wherein, said test case execution and analysis module (212) comprises unit testing module (321), integration testing module (322), system testing module (323), and a traversable list of U/I (use interface) (324).

3. The system according to claim 1, wherein the regression test planning module (213) comprises:
an impact analysis module (431);
an impacted artifact test definition module(432); and
a user defined test definition module (433), wherein the regression test planning
module (213) comprises:
an impact analysis module (431);
an impacted artifact definition module (432); and
a user defined test definition module (433).

4. The system according to claim 1, wherein the test plan generation module (214) comprises:
a release manager (540);
a unit test generation module (541);
an integration test generation module (542);
a system test generation module (543); and
a dependency testing module (544), wherein the automated test plan management module (215) comprises:
an activity flow specification module (651);
a user interface elements and navigation specifications module (652);
a technical interface structures module (653);
a logical flow and resultant conditions module (654);
a release related specification grouping module (655); and
a persistent test case module (656).

5. A method for testing software development activity within a software application, the method comprising:
creating a testing environment (711) within a development environment and identifying resources to be utilized within a testing process;
creating test plans (712) from software module development specifications;
deriving additional test cases (713) from various paths within a software development process;
executing test cases (714) and recording test results; and
defining and executing regression test cases (715) if modifications have been made (716) to software module specification subsequent to completion of testing.

6. The method according to claim 5, wherein the method further comprises:
storing all generated test case data within a test case data database (220), wherein the step of creating test plans (712) comprises:
creating a master list of test cases using the automation tool available; and
providing data changes for multiple scenarios to be tested and verified.

7. The method according to claim 5, wherein the step of deriving additional test cases (713) comprises:
creating test cases with flow specification from all business level test cases derived by said various paths;
creating test execution instructions using user interface elements (101); and
deriving specification node elements that participate within specific test plan by associating into release groups with a list of necessary test cases.

8. A machine-readable medium storing a set on instructions that, when executed by a machine, cause the machine to perform a method for testing software artifacts, the method comprising:
creating a testing environment (711) within a development environment; identifying resources to be utilized within a testing process;
creating test plans (712) from software module development specifications;
deriving additional test cases (713) from various paths within a software development process;
executing test cases (714) and recording test results; and
defining and executing regression test cases (715) if modifications have been made (716)to software module specification subsequent to completion of testing.

9. The machine readable medium according to claim 8, wherein said method further comprises:
storing (220) all generated test case data within a test case data database, wherein the step of creating test plans (712) comprises:
creating a master list of test cases using the automation tool available; and
providing data changes for multiple scenarios to be tested and verified.

10. The machine-readable medium according to claim 8, wherein the step of deriving additional test cases (713) comprises:
creating test cases with flow specification from all business level test cases derived by following said various paths;
creating test execution instructions using user interface elements (101); and
deriving specification node elements that participate within specific test plan by associating into release groups with a list of necessary test cases.
